Europäisches Patentamt

**European Patent Office**

**Office européen des brevets**

(19)

(11) Veröffentlichungsnummer: **0 400 203**
**A2**

(12) **EUROPÄISCHE PATENTANMELDUNG**

(21) Anmeldenummer: **89117835.2**

(22) Anmeldetag: **27.09.89**

(51) Int. Cl.⁵: **F41H 11/16**

(30) Priorität: **31.05.89 DE 8906649 U**

(43) Veröffentlichungstag der Anmeldung:
**05.12.90 Patentblatt 90/49**

(84) Benannte Vertragsstaaten:
**AT BE CH DE FR GB IT LI NL SE**

(71) Anmelder: **Ahlmann-Maschinenbau GmbH**
**Am Friedrichsbrunnen 2 Postfach 725**
**D-2370 Rendsburg(DE)**

(72) Erfinder: **Kalus, Franz**
**Meiereistrasse 43**
**D-2370 Büdelsdorf(DE)**

(74) Vertreter: **Dipl.-Ing. H. Hauck·Dipl.-Phys. W.**
**Schmitz Dipl.-Ing. E. Graalfs Dipl.-Ing. W.**
**Wehnert Dr.-Ing. W. Döring**
**Neuer Wall 41**
**D-2000 Hamburg 36(DE)**

(54) **Motorisch angetriebenes Fahrzeug zum Räumen von explosiven Gegenständen.**

(57) Motorisch angetriebenes Fahrzeug zum Räumen von auf einem Untergrund verstreuten explosiven Gegenständen, wie Sprengkörpern, Bomben, Minen oder dergleichen, insbesondere auf Start- und Landebahnen in Flughäfen mit einer Fahrerkabine, einer an der Vorderseite des Fahrzeugs angebrachten zumindest in der Höhe verstellbaren Räumschaufel mit einem vorderen annähernd parallel zum Untergrund bringbaren Schaufelabschnitt und einem oberhalb der Räumschaufel über deren Breite sich erstreckenden besenförmigen Räumorgan, das beweglich derart am Fahrzeug gelagert ist, daß es durch einen Antrieb angetrieben eine stetige oder intermittierende Streichbewegung zum Schaufelinneren ausführt, wobei auf die zu öffnende Oberseite der Fahrerkabine ein turmartiges Gehäuse aufsetzbar und lösbar an der Fahrerkabine befestigbar ist und das turmartige Gehäuse zumindest ein zur Vorderseite hinweisendes gepanzertes Fenster aufweist.

FIG.1

## Motorisch angetriebenes Fahrzeug zum Räumen von auf einem Untergrund verstreuten explosiven Gegenständen, wie Sprengkörpern, Bomben, Minen oder dergleichen

Die Neuerung bezieht sich auf ein motorisch angetriebenes Fahrzeug zum Räumen von auf einem Untergrund verstreuten explosiven Gegenständen, wie Sprengkörpern, Bomben, Minen oder dergleichen nach dem Oberbegriff des Anspruchs 1.

Ein derartiges Gerät ist aus dem DE-Gm 8 433 024 bekanntgeworden. An der Vorderseite des Fahrzeugs ist eine in der Höhe verstellbare Räumschaufel angeordnet mit einem vorderen annähernd parallel zum Untergrund bringbaren Schaufelabschnitt und einem oberhalb der Räumeschaufel über deren Breite sich erstreckenden Räumorgan, das beweglich derart am Fahrzeug gelagert ist, daß es durch einen Antrieb angetrieben eine stetige oder intermittierende Streichbewegung zum Schaufelinneren hin ausführt. Mit Hilfe eines derartigen Gerätes lassen sich zum Beispiel auf dem Gelände eines Flughafens, insbesondere auf den Start- und Landebahnen verstreute explosive Gegenstände einsammeln und zu einem entfernten Ort transportieren. Das Fahrzeug kann ein üblicher Radlader sein, wie er in vielfacher Weise Verwendung findet. Sein hydraulisch betätigbarer Ausleger, der sonst zum Beispiel eine Schaufel hält, nimmt zu Räumungszwecken die spezielle Räumschaufel sowie das besenförmige Räumorgan auf.

Da das beschriebene Räumfahrzeug nur in speziellen Einsatzfällen verwendet wird, ist es von Vorteil, wenn es auch für andere Zwecke eingesetzt werden kann. Wird zum Beispiel das beschriebene Räumfahrzeug zu militärischen Zwecken verwendet, kann es wahlweise auch als Pioniergerät Einsatz finden. Soll es zum Räumen von Explosivkörpern eingesetzt werden, wird die übliche Ladeschaufel durch das beschriebene Räumgerät ersetzt. Zusätzlich werden die empfindlichen Teile des Fahrzeugs, insbesondere die Fahrerkabine, gepanzert, indem Panzerplatten an vorgegebenen Stellen montiert werden.

Obwohl von der Fahrerkabine aus die Betätigung des Auslegers bzw. des daran befindlichen Werkzeugs überwacht werden kann, ist die Sicht unmittelbar auf den Bereich vor der Räumschaufel eingeschränkt. Es ist daher wünschenswert, die Überwachungsmöglichkeiten zu verbessern. So kann beispielsweise nicht immer erkannt werden, ob die Größe der abzuräumenden Sprengkörper gestattet, sie noch mit der Räumschaufel aufzunehmen, insbesondere wegen der damit verbundenen Gefahr für das Personal des Räumgeräts, das bei der Explosion eines größeren Sprengkörpers Schaden nehmen kann.

Damit das beschriebene bekannte Räumgerät auch bei Dunkelheit operieren kann, sind zweckmäßigerweise Scheinwerfer vorzusehen, die das zu räumende Gelände beleuchten. Für den Betrieb des beschriebenen Fahrzeugs für andere Zwecke ist jedoch das ständige Mitführen der Scheinwerfer umständlich. Außerdem können die Scheinwerfer beschädigt werden.

Der Neuerung liegt die Aufgabe zugrunde, ein motorisch angetriebenes Fahrzeug zum Räumen der eingangs genannten Art dahingehend zu verbessern, daß es wahlweise als Räumgerät oder als übliches Pioniergerät oder dergleichen verwendet werden kann und das ferner im Einsatz als Räumgerät eine verbesserte Umfeldbeobachtung ermöglicht.

Diese Aufgabe wird gelöst durch die Merkmale des Kennzeichnungsteils des Anspruchs 1.

Bei dem neuerungsgemäßen Fahrzeug ist auf die zu öffnende Oberseite der Fahrerkabine ein turmartiges Gehäuse aufsetzbar und lösbar an der Fahrerkabine befestigbar, das zumindest an der Vorderseite ein gepanzertes Fenster aufweist. Das turmartige Gehäuse erhöht mithin die Fahrerkabine und ermöglicht einen Ausblick auf das Umfeld von einem erhöhten Niveau aus. Eine das Umfeld beobachtende Person kann sich daher neben dem Fahrer in der Kabine aufhalten und über das Fenster im turmartigen Gehäuse eine Beobachtung vornehmen.

Bei der Neuerung wird davon ausgegangen, daß das Dach einer Fahrerkabine eines herkömmlichen für ein Räumgerät geeignetes Fahrzeug verhältnismäßig leicht abnehmbar gestaltet ist, indem es von einer separaten Platte geformt ist, die vorzugsweise durch Verschraubung mit den Seitenwänden der Kabine verbunden ist. Das turmartige Gehäuse kann daher anstelle der Deckenplatte aufgesetzt werden, die zuvor entfernt wird. Eine Befestigung erfolgt vorzugsweise mittels Schnellverschlüssen.

Nach einer Ausgestaltung der Erfindung weist das turmartige Gehäuse an der Vorderseite eine vorzugsweise bewegliche Blende für eine Schußwaffe oder dergleichen auf. Dadurch wird es der beobachtenden Person ermöglicht, mit Hilfe einer Schußwaffe größere Explosivkörper in einem gewissen Abstand durch Beschuß zur Explosion zu bringen.

Da, wie bereits erwähnt, zweckmäßig ist, am Fahrzeug Scheinwerfer vorzusehen, sieht eine Ausgestaltung der Neuerung vor, daß diese auf dem Dach des turmartigen Gehäuses angebracht sind. Die Scheinwerfer sind vorzugsweise verstellbar, insbesondere verdrehbar gelagert. Eine im Inneren des turmartigen Gehäuses angebrachte Verstellvorrichtung ermöglicht es der Bedienungsperson, die Scheinwerfer wunschgemäß zu positionieren. Eine Verstellvorrichtung kann zum Beispiel aus einer mit dem Scheinwerfergehäuse verbundenen Stange bestehen, die in das Innere des Turms hineinragt.

Insbesondere bei der Verwendung von Scheinwerfern und auch anderen mit elektrischer Energie zu versorgenden Geräten müssen Kabel im turmartigen Gehäuse verlegt sein. Da das turmartige Gehäuse abgenommen werden soll, wenn ein Räumeinsatz nicht bevorsteht, müssen auch die Kabelverbindungen unterbrochen werden. Eine Ausgestaltung der Neuerung sieht daher dazu vor, daß die Steckverbinderteile annähernd in der Trennebene zwischen der Oberseite der Fahrerkabine und der Unterseite des turmartigen Gehäuses liegen.

Beim Einsatz einer Schußwaffe im Inneren der Fahrerkabine bzw. des turmartigen Gehäuses entwickelt sich Dampf, der sich für die in der Fahrerkabine befindlichen Personen unangenehm auswirkt. Eine Ausgestaltung der Neuerung sieht daher einen Lüfter auf em Dach des turmartigen Gehäuses vor, der wahlweise in Gang gesetzt werden kann, um die Kabinenluft zu reinigen. Er saugt entweder Luft aus der Kabine oder drückt frische Luft in sie hinein.

Das turmartige Gehäuse hat zweckmäßigerweise mindestens einen Anschlag an der Außenseite, damit es mit Hilfe eines Hebezeugs auf die vom Dach befreite Fahrerkabine des Fahrzeugs aufgesetzt werden kann. Um das Aufsetzen zu erleichtern, sind zweckmäßigerweise nach unten weisende Ansätze bzw. Hörner vorgesehen, die für eine gewisse Ausrichtung beim Montieren sorgen.

Die Wände des turmartige Gehäuses bestehen vorzugsweise aus Panzerstahl, um die Beobachtungsperson gegen Splitter zu schützen. Auch die Fenster, die zumindest auch zu den Seiten hin gerichtet sind, sind gepanzert. Die Panzerscheiben sind dabei nach einer Ausgestaltung der Neuerung vorzugsweise in einem Profilrahmen angebracht, der von außen auf die Wand des turmartigen Gehäuses im Fensteröffnungsbereich aufgesetzt ist.

Die Abmessungen des turmartigen Gehäuses sind so gewählt, daß eine in der Fahrerkabine stehende Person aus den Fenstern des turmartigen Gehäuses einen guten Ausblick hat.Da jedoch die Beobachtungspersonen verschiedene Körpergrößen haben können, ist vorzugsweise ein höhenverstellbarer Stand in der Fahrerkabine angeordnet. Der Stand befindet sich vorzugsweise neben dem Fahrersitz, der normalerweise von einem Beifahrersitz eingenommen wird. Der höhenverstellbare Stand weist daher nach einer Ausgestaltung der Neuerung an der Unterseite ein Einsteckteil auf, der in die Aufnahme eines Sitzes einsteckbar ist. Die Standfläche ist dabei nach einer weiteren Ausgestaltung der Neuerung aus zwei auseinanderklappbaren Teilen gebildet, um der Beobachtungsperson einen sicheren, ausreichend großen Untergrund zur Verfügung zu stellen.

Es versteht sich, daß im Turm auch weitere Vorrichtungen angebracht sein können, die die Tätigkeit des Beobachters erleichtern, wie zum Beispiel ein Munitionskasten, Stauraum für bestimmte Gegenstände oder Werkzeuge, eine Bord sprechanlage bzw. eine Funkanlage zur Kommunikation mit dem Fahrer oder mit externen Stellen usw.

Die Neuerung wird nachfolgend anhand von Zeichnungen näher erläutert.

Fig. 1 zeigt in Seitenansicht ein Fahrzeug nach der Neuerung.

Fig. 2 zeigt eine Draufsicht auf den Turm des Fahrzeugs nach Fig. 1.

Fig. 3 zeigt eine Seitenansicht des Turms nach Fig. 2 in Richtung Pfeil 3.

Fig. 4 zeigt eine Seitenansicht des Turms nach Fig. 2 in Richtung Pfeil 4.

Fig. 5 zeigt einen Schnitt durch die Darstellung nach Fig. 3 entlang der Linie 5-5.

Fig. 6 zeigt eine Seitenansicht eines Beobachterstands im Fahrzeug nach Fig. 1.

Fig. 7 zeigt eine Ansicht der Darstellung nach Fig. 6 in Richtung Pfeil 7.

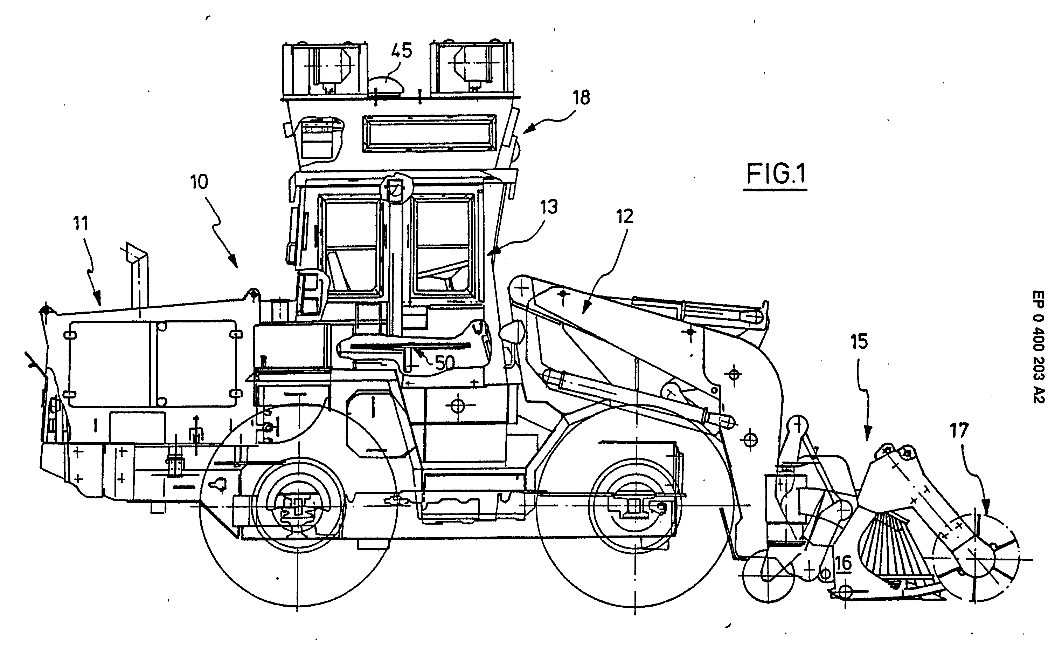

In Fig. 1 ist ein Fahrzeug 10 dargestellt, das im Aufbau einem herkömmlichen Radlader entspricht mit einem Antriebsteil 11 am hinteren Ende und einem Ausleger 12 am vorderen Ende und einer Fahrerkabine 13 im mittleren Bereich. Am Ausleger 12, der herkömmlich aufgebaut und hydraulisch betätigt wird, ist ein Räumgerät 15 angebracht, das im wesentlichen aus einer Räumschaufel 16 und einer besenartigen Rolle 17 besteht. Das Räumgerät 15, das, wie eingangs beschrieben ist, bekannt ist, dient zum Aufsammeln von explosiven Gegenständen vom Boden, wobei die besenartige Rolle 17 die Gegenstände in die Räumschaufel 16 durch eine Streichbewegung hineinbefördert.Auf der Fahrerkabine 13 ist ein Turm 18 angeordnet, der nachstehend noch detaillierter beschrieben wird. Der Turm 18 wird auf die Oberseite der Fahrerkabine 13 aufgesetzt, nachdem zuvor das Dach der Fahrerkabine 13 entfernt worden ist. Üblicherweise besteht das Dach der Fahrerkabine aus einem getrennten Bauteil, das zum Beispiel mittels einer Schraubbefestigung an den Wänden der Kabine 13 befestigbar ist. Ohne den Turm 13 kann das Fahrzeug 10 als normaler Radlader oder dergleichen verwendet werden, wobei dann auch das Räumgerät durch eine Schaufel oder ein ähnliches Werkzeug ersetzt wird. Zum Räumen von explosiven Gegenständen wird hingegen, wie beschrieben, der Turm 18 in Position gebracht. Außerdem werden unter anderem die empfindlichen Teile der Kabine 13 mit Panzerplatten abgedeckt, damit ein Schutz gegen Splitter beim Räumen gewährleistet ist.

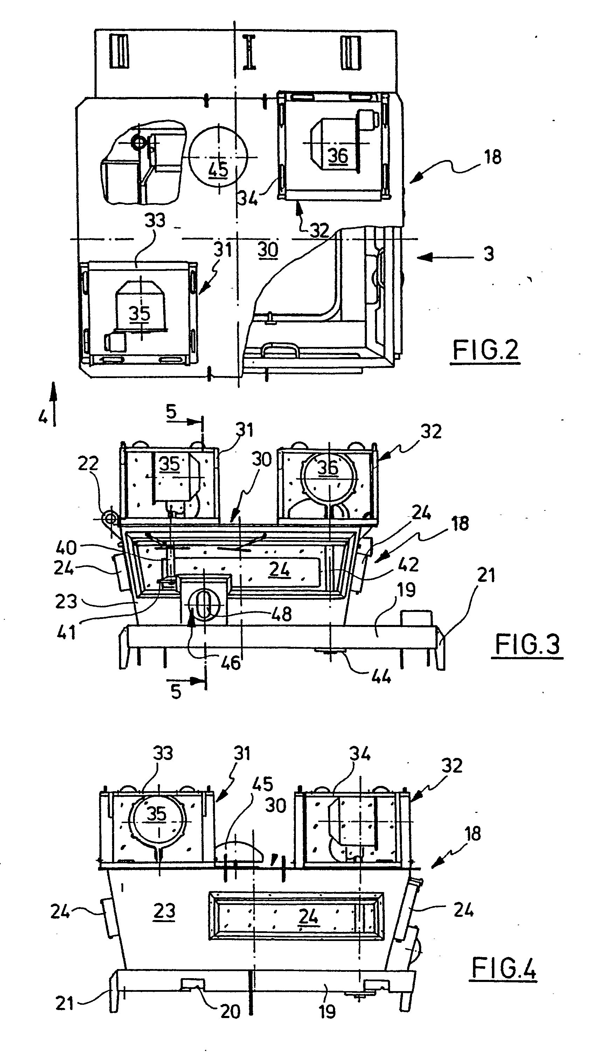

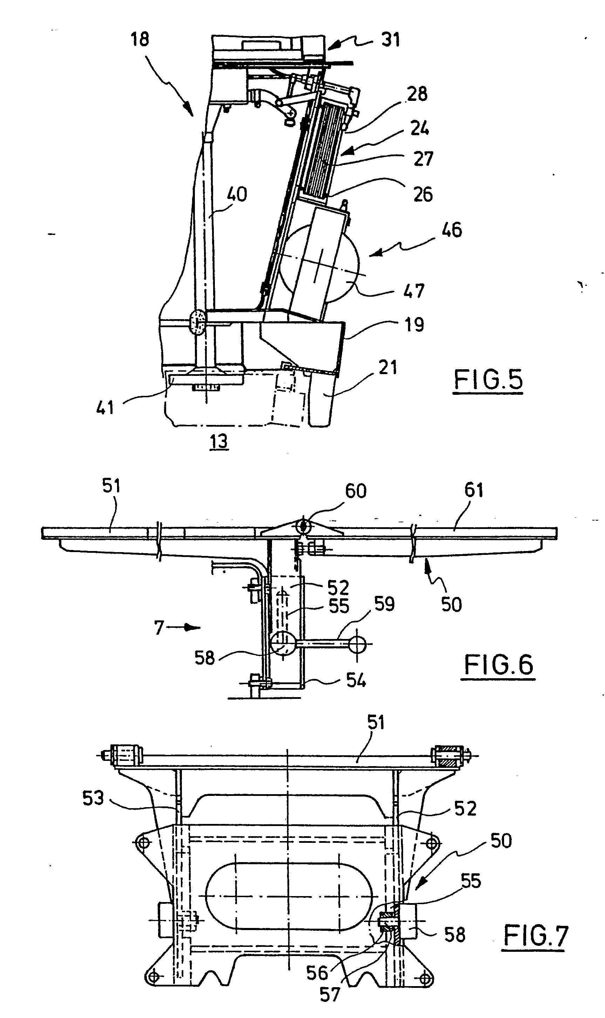

Der Turm 18 weist am unteren Ende einen Aufsatzrahmen 19 auf, mit dem er auf die Kabine 13 aufgesetzt und mittels Schnellverschlüssen 20 befestigt werden kann. Vom Aufsatzrahmen 20 erstrecken sich Hörner 21 nach unten, die für eine gewisse Zentrierung beim Aufsetzen des Turms 18 auf die Kabine 13 sorgen. Der Turm 18 weist Anschläge auf, die bei 22 gezeichnet sind, um ihn mittels eines Hebezeuges anzuheben und auf der Fahrerkabine zu plazieren bzw. von der Fahrerkabine abzuheben. Die Seitenwände 23 des Turms 18 divergieren nach oben und weisen gepanzerte Fenster 24 auf. Wie aus Fig. 3 hervorgeht, sind an drei Seiten Fenster 24 vorgesehen, d.h. nur nach hinten heraus besteht keine Sicht aus dem Turm 18. Wie näher aus Fig. 5 hervorgeht, sind vor den Fensteröffnungen in den Wänden U-Profilrahmen 26 angebracht zur Aufnahme der Panzerglasscheiben 27. Das vordere gepanzerte Fenster weist außerdem Scheibenwischer 28 auf, die vom Inneren des Turms 18 von Hand bedient werden können.

Auf dem Dach 30 des Turms 18 sind Scheinwerferanordnungen 31, 32 vorgesehen. Sie besitzen ein Gehäuse 33 bzw. 34, das zu jeweils drei Seiten hin von Panzerglasscheiben gebildet ist. Im Gehäuse befindet sich ein Scheinwerfer 35 bzw. 36, der um eine Hochachse und eine horizontale Achse drehbar gelagert ist. Wie aus den Figuren 3 und 5 hervorgeht, erstreckt sich vom Scheinwerfer 35 bzw. 36 durch das Dach 30 nach unten eine Stange 40 bzw. 42, die an ihrem unteren Ende ein Handrad 41 bzw. 44 aufweist. Eine Drehung am Rad 41 bzw. 44 führt zu einer Verdrehung des Scheinwerfers 35 bzw. 36.

Im Dach 30 bzw. darüber befindet sich ein Lüfter 45, um Abgase im Turm 18 nach außen zu leiten bzw. Frischluft nach innen zu saugen. In der vorderen Wand 23 des Turms 18 ist eine Blende 46 angeordnet in Form einer begrenzt drehbar gelagerten Kugel 47, die einen länglichen Durchbruch 48 aufweist. Die Blende 46 dient zur Aufnahme einer Schußwaffe.

Im Inneren des Turms 18 sind Stauraum, Haken zum Aufhängen von Bekleidung, Munitionskasten und andere Dinge angeordnet, die für den Dienst eines Beobachters im Turm 18 erforderlich oder wünschenswert sind. Hierzu gehört auch eine Sprechanlage zur Verständigung mit dem Fahrer in der Kabine 13 bzw. mit einer Station außerhalb des Fahrzeugs. Kabel, die zum Beispiel zur Versorgung der Scheinwerfer mit Strom dienen, sind ebenfalls im Inneren des Turms 18 angebracht, wobei die Verbinderteile in der Trennebene zwischen Turm 18 und Kabine 13 liegen (nicht gezeigt).

Der Beobachter, der aus den Fenstern 24 heraus das Umfeld vom Fahrzeug 10 aus beobachten soll, steht im Fahrzeug auf einem Stand 50 (siehe Fig. 1), der neben dem Fahrersitz in der Kabine 13 montiert ist. Der Stand 50 geht näher aus den Figuren 6 und 7 hervor. Die Standfläche weist eine erste Platte 51 auf, die an beabstandeten Flacheisen 52, 53 befestigt ist. Die Flacheisen 51, 52 sind an im Querschnitt U-förmigen Führungen 54 geführt, die seitlich mit einer Sitzhalterung verbunden sind. Der Steg der Führungen 54 weist einen Längsschlitz 55 auf, in dem eine Mutter 56 geführt ist, die auf einem Gewindeschaft 57 sitzt, der mit einer Rolle 58 fest verbunden ist. An der Rolle 58 sitzt ein Betätigungshebel 59. Durch Drehung des Betätigungshebels kann die Mutter 56 klemmend gegen die Führung 54 gezogen werden, um die jeweilige Höhenlage der Standfläche zu fixieren. An der Platte 51 ist über Scharniere 60 eine zweite Platte 61 angelenkt, welche die Standfläche vergrößert.

Im Einsatzfall wird der Stand 50 entsprechend der Körpergröße des im Turm 18 zu postierenden Beobachters einge stellt. Der Beobachter kann über die Fenster 24 feststellen, wo zu räumende Explosivkörper verstreut liegen, um über die Bordsprechanlage dem Fahrer entsprechende Anweisung zu erteilen. Außerdem kann er über eine Schußwaffe, die er durch die Blende 42 hindurchsteckt, größere Explosivkörper, die sich nicht zur Aufnahme im Räumgerät 15 eignen, zur Explosion bringen. Der Turm 18 besteht aus gepanzertem Material, so daß der Beobachter gegen Splittereinwirkung geschützt ist. Bei Dunkelheit wird das zu räumende Feld von den Scheinwerfern 35, 36 beleuchtet, wobei die Stellung der Scheinwerfer vom Beobachter im Turm 18 verändert werden kann. Der Lüfter 45 sorgt für die Beseitigung der Abgase, die beim Gebrauch der Schußwaffe entstehen.

**Ansprüche**

1. Motorisch angetriebenes Fahrzeug zum Räumen von auf einem Untergrund verstreuten explosiven Gegenständen, wie Sprengkörpern, Bomben, Minen oder dergleichen, insbesondere auf Start- und Landebahnen in Flughäfen mit einer Fahrerkabine, einer an der Vorderseite des Fahrzeugs angebrachten zumindest in der Höhe verstellbaren Räumschaufel mit einem vorderen annähernd parallel zum Untergrund bringbaren Schaufelabschnitt und einem oberhalb der Räumschaufel über deren Breite sich erstreckenden besenförmigen Räumorgan, das beweglich derart am Fahrzeug gelagert ist, das es durch einen Antrieb angetrieben eine stetige oder intermittierende Streichbewegung zum Schaufelinneren ausführt, dadurch gekennzeichnet, daß auf die zu öffnende Oberseite der Fahrerkabine (13) ein turmartiges Gehäuse (18) aufsetzbar und lösbar an der Fahrerkabine befestigbar ist und das turmartige Gehäuse zumindest ein zur Vorderseite hinweisendes gepanzertes Fenster (24) aufweist.

2. Fahrzeug nach Anspruch 1, dadurch gekennzeichnet, daß das turmartige Gehäuse (18) mittels Schnellverschlüssen (20) an der Fahrerkabine (13) befestigbar ist.

3. Fahrzeug nach Anspruch 1 oder 2, dadurch gekennzeichnet, daß das turmartige Gehäuse (18) an der Vorderseite eine vorzugsweise bewegliche Blende (47) für eine Schußwaffe oder dergleichen aufweist.

4. Fahrzeug nach einem der Ansprüche 1 bis 3, dadurch gekennzeichnet, daß auf dem Dach (30) des turmartigen Gehäuses (18) mindestens ein Scheinwerfer (35, 36) verdrehbar und/oder verschwenkbar gelagert ist und im Inneren des turmartigen Gehäuses (18) eine Verstellvorrichtung (40, 42) für die Betätigung der Scheinwerfer (35, 36) angeordnet ist.

5. Fahrzeug nach einem der Ansprüche 1 bis 4, dadurch gekennzeichnet, daß im Inneren des turmartigen Gehäuses (18) elektrische Kabel angeordnet sind mit Steckverbinderteilen, die annähernd in der Trennebene zwischen der Oberseite der Fahrerkabine (13) und der Unterseite des turmartigen Gehäuses (18) liegen.

6. Fahrzeug nach einem der Ansprüche 1 bis 5, dadurch gekennzeichnet, daß im Dach (30) des turmartigen Gehäuses (18) ein Lüfter (45) angeordnet ist.

7. Fahrzeug nach einem der Ansprüche 1 bis 6, dadurch ge kennzeichnet, daß am unteren Rand des turmartigen Gehäuses (18) nach unten weisende Ansätze (21) angeordnet sind, die die Fahrerkabine an der Oberseite übergreifen.

8. Fahrzeug nach einem der Ansprüche 1 bis 7, dadurch gekennzeichnet, daß ein Profilrahmen (26) für Panzerglas (27) an der Außenseite der Wand (23) des turmartigen Gehäuses (18) vor den Fensteröffnungen angebracht ist.

9. Fahrzeug nach einem der Ansprüche 1 bis 8, gekennzeichnet durch mindestens einen Scheibenwischer (28) für die gepanzerte Scheibe (27).

10. Fahrzeug nach einem der Ansprüche 4 bis 9, dadurch gekennzeichnet, daß eine drehbare Stange (40, 42) vom Gehäuse des Scheinwerfers (35, 36) durch das Dach (30) des turmartigen Gehäuses (18) in das Innere hineingeführt ist.

11. Fahrzeug nach einem der Ansprüche 1 bis 10, dadurch gekennzeichnet, daß mindestens ein Anschlag (22) an der Außenseite des turmartigen Gehäuses (18) vorgesehen ist zum Ergreifen durch ein Hebezeug.

12. Fahrzeug nach einem der Ansprüche 1 bis 11, dadurch ge kennzeichnet, daß im Inneren der Fahrerkabine (13), vorzugsweise neben dem Fahrersitz ein vorzugsweise höhenverstellbarer Stand (50) angeordnet ist.

13. Fahrzeug nach Anspruch 12, dadurch gekennzeichnet, daß der Stand (50) ein unteres Einsteckteil (51, 52) aufweist zum Einstecken in die Aufnahme (54) eines Sitzes.

14. Fahrzeug nach Anspruch 12 oder 13, dadurch gekennzeichnet, daß die Standfläche aus zwei auseinanderklappbaren aneinandergelenkten plattenförmigen Teilen (51, 61) besteht.

FIG.1

EP 0 400 203 A2

FIG.2

FIG.3

FIG.4

FIG.5

FIG.6

FIG.7